# EUROPEAN PATENT APPLICATION

(11) **EP 3 770 037 A1**
(43) Date of publication of application: **27.01.2021**
(21) Application number: 18910943.2
(22) Date of filing: 25.12.2018
(51) Int. Cl.: B61B 13/10, B61B 1/00, B61C 15/00

(54) **HIGH-SPEED TRANSPORTATION DEVICE USING TUBE IN PLACE OF RAIL**

(30) Priority: 17.03.2018 CN 201810221645; 11.07.2018 CN 201810756669; 05.08.2018 CN 201810881265; 05.08.2018 CN 201810881258; 19.11.2018 CN 201811371649; 19.12.2018 CN 201811555492
(71) Applicant: Liu, Marvin, Changzhou, Jiangsu 213025 (CN)
(72) Inventor: Liu, Marvin, Changzhou, Jiangsu 213025 (CN)
(74) Representative: Vitina, Maruta
(86) International application number: PCT/CN2018/123594
(87) International publication number: WO 2019/179193

(57) **Abstract**

The present invention provides a transportation device using a tube as a rail, including a tube structure, a carrier structure, a control system, a braking system, and a driving system. The tube structure is an extension structure surrounded by a tube wall. The tube wall is provided with a plurality of unidirectional airflow windows configured to control a flowing direction of airflow. The carrier structure operates in the tube structure. The carrier structure is a carriage-type structure. Compared to the existing rapid transportation device, the present invention has the characteristics of high efficiency, low cost, high speed and high safety, which can be used for the development of a new type of rapid transportation device.

## Description

### TECHNICAL FIELD

The present disclosure relates to vehicle technology, and in particular to a transportation device using a tube as a rail.

### BACKGROUND

In our daily life, the commonly used transportation vehicles are automobiles, trains, aircrafts, ships, electric vehicles, motorcycles, etc.. Among them, there are many types of automobiles, which can be divided into passenger cars mainly used for carrying passengers, trucks mainly used for carrying cargo, special-purpose vehicles used for construction engineering, agricultural production and sports competition, etc. according to their application. The automobiles can be divided into ordinary cars and off-road vehicles according to the adaptability to the road, and can be divided into piston type internal combustion engine car, electric engine car, gas turbine engine car according to the power type of the engine. There are also many types of aircrafts, which can be divided into civilian passenger airplane, military transport aircraft, military aircraft, etc. according to the application. The aircrafts can be divided into propeller aircraft and jet aircraft according to the type of engine. Trains include ordinary trains, maglev trains and high-speed trains. At present, the vacuum tube train proposed in the United States represents a development direction of high-speed rail transit in the future. However, maintaining the vacuum and magnetic levitation state in the vacuum tube is a technical problem that needs to be solved urgently. In addition, the underground tunnel operation system being developed in the United States also has high construction cost and operating cost. The existing high-speed rail can increase the speed, while the risk of derailment is difficult to solve. With the progress of society and the development of the times, people are increasingly demanding how to improve the efficiency of using time. Saving time is synonymous with improving efficiency. Therefore, it is of great significance and important practical value to develop a rapid transportation device which has the convenience of trains and cars and no derailment risk and can surpass the existing ground running speed, reach the speed of aircraft and save time.

### SUMMARY

In order to solve the above technical problems, the present disclosure provides a stable and rapid transportation device.

The present disclosure provides a transportation device using a tube as a rail, including a drive system, a carrier structure and a rail. The rail is a tube structure surrounded by a tube wall. The tube wall is provided with a plurality of unidirectional airflow windows configured to control a flowing direction of an airflow. The carrier structure is driven by the drive system to operate in the tube structure.

The plurality of unidirectional airflow windows include a plurality of passively opened airflow windows and a plurality of actively opened airflow windows:
1) The plurality of passively opened airflow windows are activated by a pressure difference of an internal pressure and an external pressure of the tube structure. The plurality of passively opened airflow windows include outward passively opened airflow windows used under a condition that the internal pressure is greater than the external pressure of the tube structure. The plurality of passively opened airflow windows are arranged at multiple parts of the tube wall of the tube structure.
2) The plurality of actively opened airflow windows driven by mechanical kinetic energy include outward actively opened airflow windows and inward actively opened airflow windows. The plurality of actively opened airflow windows are arranged at multiple parts of the tube wall of the tube structure.

The transportation device further includes a control system and a braking system, having at least one following features:
1) The drive system includes a driving structure arranged in front of the carrier structure. The driving structure is provided with a driving device configured to drive the driving structure to operate forward and backward.
2) The driving system includes a running sealing structure arranged in rear of the carrier structure. The running sealing structure is able to operate forward and backward.
3) The driving structure, one or more of the carrier structures, and the running sealing structure are arranged in sequence along a traveling direction of the carrier structure from front to back in the tube structure.
4) An operating gap is formed between an outer wall of the driving structure and the tube wall, an outer wall of the carrier structure and the tube wall, an outer wall of the running sealing structure and the tube wall.
5) The drive system includes a decompression structure arranged in the tube structure. The decompression structure is an exhaust device provided with an exhaust power device. An intake of the exhaust power device is communicated with the operating gap.

The driving structure has at least one of following features:
1) The driving structure is arranged in front of the carrier structure. The driving structure is an airtight structure which is able to seal most parts of the tube structure.
2) The driving structure includes at least one driving device, a driving operation structure and a driving operation sealing structure. The driving structure is an airtight structure which is able to seal most parts of the tube structure.
3) The driving structure is able to adjust a distance and a contact tightness between the outer wall of the driving operation sealing structure and the tube wall by laterally stretch.

The running sealing structure has at least one of following features:
1) The running sealing structure is arranged in rear of the carrier structure. The driving structure is an airtight structure which is able to seal most parts of the tube structure and operate forward and backward.
2) The running sealing structure includes a sealing operation structure and a sealing structure. The running sealing structure is arranged in rear of the carrier structure. The driving structure is an airtight structure which is able to seal most parts of the tube structure and operate forward and backward.
3) The running sealing structure is able to adjust a distance and a tightness between the outer wall of the running sealing structure and the tube wall by laterally stretch.

The driving structure plays a dual role. On the one hand, the driving structure is configured to discharge the air in the tube structure through the unidirectional airflow windows so as to partially form a semi-vacuum state in the tube structure. And on the other hand, the driving structure is configured to drive the carrier structure to operate forward. A pressure differential is generated between the semi-vacuum state in front of the carrier structure and a space behind the carrier structure, creating a forward impetus force applied to the tail portion of the carrier structure.

The decompression structure includes a sealing decompression structure. The exhaust power device is arranged in the running sealing structure to form the sealing decompression structure. An air inlet of the exhaust power device is arranged in a front portion of the exhaust power device and communicates with the operating cavity. An exhaust port of the exhaust power device is arranged in a rear portion of the exhaust power device and communicates with an air in the tube structure behind the running sealing structure. The sealing decompression structure is independent of the carrier structure or integrated with the carrier structure.

The air inlet of the exhaust power device is provided with an one-way airflow valve configured to open according to air pressure and control a flowing direction of the airflow. The one-way airflow valve is opened when the air pressure is a negative pressure. The flowing direction of the airflow is from the operating cavity to an outside space of the operating cavity.

The exhaust power device commonly adopts a turbofan, a ducted fan, an axial fan, a ram jet, a pulse jet, a bladeless fan, an electric fan, a fan engine, a ducted fan engine, a turbofan engine, a turbojet engine, and a ram jet engine, pulse jet engine, turbofan jet engine, etc.

The carrier structure includes a carriage-type structure and a carrier-type structure. The carrier structure includes at least one of following features:
1) provided with an independent driving device;
2) arranged behind the driving structure;
3) followed by the running sealing structure;
4) provided with a magnetic levitation structure at a lower portion of the carrier structure and above a bottom wall of the tube structure;
5) a plurality of carrier structures are arranged in series.

The driving device adopts driving manners of wheel-rail driving, linear motor driving, and exhausting driving and reacting driving.

The driving structure, the sealing structure and the tube structure are provided with a position limiting structure separately. The position limiting structure includes a first magnetic device arranged on the tube wall, a second magnetic device arranged on the driving structure and the running sealing structure and an elastic structure arranged on the driving operation sealing structure. The first magnetic device matches with and repulses to the second magnetic device. A clearance is formed between the tube wall and an outer surface of the driving operation sealing structure with a width of 0-50 mm, preferably 0-30 mm, more preferably 0-10 mm.

The sealing structure is integrated with the running structure. The sealing structure can automatically adjust and control the extend-retract state, so that not only the sealing effect of the sealing structure can be ensured, but also the turning problem in the tube structure due to a long length of the sealing structure and the running structure is not occurred.

The braking system includes a plurality of actively closed windows arranged on the tube wall.

The driving system includes a plurality of actively opened windows arranged on the tube wall.

The tube wall is provided with a plurality of outward opening tube exits and a plurality of lateral or inward opening carrying safety entrances. The plurality of outward opening tube exits and the plurality of lateral or inward opening carrying safety entrances are alternatively arranged in an unequal distance. For example, four doors are arranged at different distances on both sides of the carriage structure, and two doors are arranged on the tube structure at different distances corresponding to the carriage structure, so that no matter where the carriage structure is stopped, there is always a door on the tube structure corresponding to a door of the carriage structure, thereby ensuring the controllability of fault evacuation.

The transportation device further includes a plurality of sensors arranged on the carrier structure, the tube structure, the braking system and the driving system. Each of the plurality of sensors is electrically coupled to the control system.

The present disclosure provides an application of the transportation device using a tube as a rail in the development of rapid transportation devices.

The present disclosure has following advantages due to the above technical solutions:
1. The disclosure adopts the technical design of using the tube as the running rail, thereby effectively avoiding the risk of derailment when the transportation device operates at an ultra-high speed. At the same time, a plurality of unidirectional airflow windows are arranged on the tube wall, and the front air pressure is increased when the running structure operates forward, and the plurality of unidirectional airflow windows are passively opened to maintain the balance between the front air pressure in front of the running structure and the air pressure outside the tube structure, so that the pressure difference resistance in front of the running structure is kept unchanged, improving the operation efficiency.
2. The disclosure adopts a driving structure arranged at the front of the transportation device and a running sealing structure arranged at the rear of the transportation device, and the carrier structure is wrapped between the driving structure and the running sealing structure. The driving structure, the carrier structure and the running sealing structure are surrounded by the tube structure. A partially closed small environment is formed in this way. At this time, a high-efficiency turbofan engine is arranged on the running sealing structure, so that the residual and the small amount of air leaking into the operating cavity at any time are quickly discharged, thereby keeping the small environment surrounding the carrier structure in a semi-vacuum state. The actual vacuum degree will depend on the power of the turbofan engine and the tightness of the small environment, which can be adjusted according to the situation in actual operation.
3. The disclosure is provided with a plurality of passively opened windows which are started by a pressure difference between the air pressure in the tube structure and the air pressure outside the tube structure. Due to the driving structure arranged in the tube structure, when the transportation device in the tube structure 1 is operated forward, the front air pressure is increased, so that the front air pressure is greater than the air pressure outside the tube structure. The passively opened windows are passively opened, so that the air in the tube structure flows out of the tube structure through the outward actively opened airflow windows, forming a low air pressure in rear of the driving structure. At this time, the air pressure in the tube structure behind the driving structure is lower than the air pressure outside the tube structure, and a negative pressure difference is formed between the tube structure and an external space outside the tube structure, which can make the outward actively opened airflow windows quickly closed, so that the carrier structure operates at low air pressure, reducing the forward and lateral air resistance of the carrier structure operating in the tube, improving the operational efficiency.
4. The present disclosure adopts the running sealing structure arranged behind the carrier structure. The high-pressure air behind the running sealing structure is prevented from flowing into the low pressure region around the carrier structure, so that the low pressure region around the carrier structure is maintained. The lateral air resistance of the carrier structure running in the tube is reduced, improving the operating efficiency.
5. The present disclosure is provided with plurality of actively opened airflow windows driven by mechanical kinetic energy on the tube wall, and the inward actively opened airflow windows are actively opened in the rear of the sealing structure. The air outside the tube structure enters the tube structure quickly, eliminating the reverse thrust caused by the negative pressure state formed at the tail portion of the carrier structure during the operation, thereby improving the operating efficiency.
6. The present disclosure is provided with a sealing decompression structure configured to assist to maintain the low pressure state of the carrier structure region. A small amount of external airflow will continuously flow into the tube structure during the operation of the carrier structure, affecting the low air pressure state inside the tube. The sealing decompression structure arranged behind the carrier structure continuously discharges the air flowing into the tube structure through the exhaust power device. The low air pressure state of the carrier structure region is maintained, reducing the lateral air resistance of the carrier structure in the tube structure, and improving the operating efficiency.
7. The disclosure is provided with a flexible and retractable connection structure between the driving structure and the carrier structure, which can ensure the formation of the negative pressure behind the driving structure and avoid the impact force and the collision force formed by the forward operation of the carrier structure during the brake operation, ensuring the safety of operation.
8. The disclosure adopts the unidirectional airflow windows on the tube wall in front of the driving structure, so that the air in front of the driving structure can not be discharged, and an air resistance layer in the tube is formed. So that, an integrated braking system integrated the tube structure with the running structure is formed, which improves the braking efficiency.
9. The driving structure and the running sealing structure of the present disclosure have a larger sealing area of the cross section of the tube structure than that of the carrier structure. That is, the cross-sectional area of the carrier structure is smaller than that of the driving structure and the running sealing structure, such that the volume of the air leaking into the operating cavity through the clearance between the driving structure, the running sealing structure and the tube structure is significantly smaller than that of the operating cavity between the carrier structure and the tube structure, forming a negative pressure.
10. The carrier structure of the present disclosure can effectively avoid the influence of the wind, rain, snow, lightning and other external environments during the operation of the carrier structure in the tube structure, thereby improving the safety of the operation and significantly reducing the additional design and construction costs imposed by the above environmental impacts. At the same time, the tube structure is simple and the construction is convenient. Therefore, it can be placed on the ground, under the ground, on the bridge and in the tunnel, which can significantly reduce the investment in road construction.

### BRIEF DESCRIPTION OF THE DRAWINGS

FIG. 1 is a top view showing the overall structure of the transportation device of the present invention.
FIG. 2 a schematic view showing the overall structure of the transportation device including a running sealing structure according to the present disclosure.
FIG. 3 a side view showing the overall structure of the transportation device including a running sealing structure according to the present disclosure.
FIG. 4 is a schematic view showing an opening structure of unidirectional airflow windows arranged on two side walls of the tube structure.
FIG. 5 is a schematic view showing an closing structure of unidirectional airflow windows arranged on two side walls of the tube structure.
FIG. 6 is a schematic view showing the driving structure.
FIG. 7 is a schematic view showing the running sealing structure.
FIG. 8 is a schematic view showing the position limiting structure and the driving structure.
FIG. 9 is a schematic view showing the position limiting structure and the running sealing structure.

### DETAILED DESCRIPTION OF EMBODIMENTS

The present disclosure will be further described below with reference to specific embodiments.

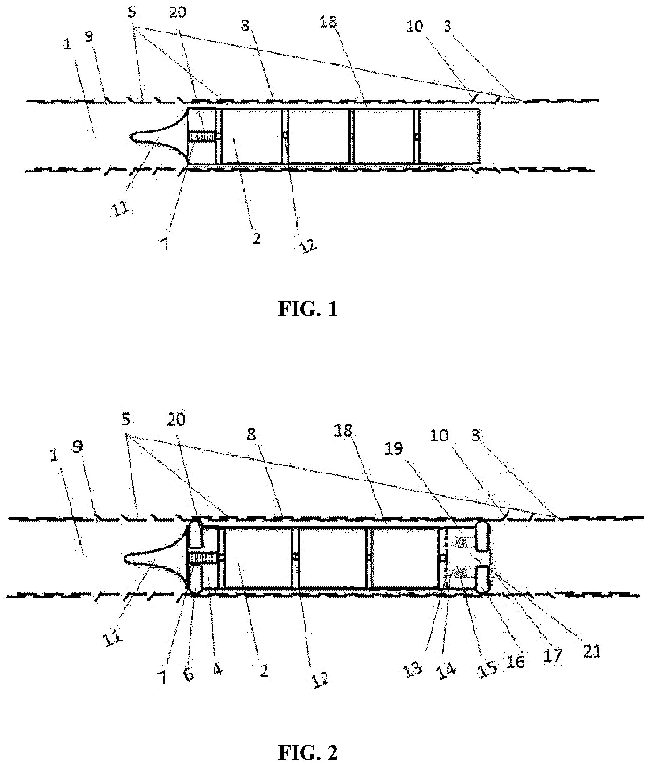

As shown in FIG. 1, the transportation device using a tube as a rail of the present disclosure includes a tube structure 1 and an running structure including a driving structure 4 and at least one carrier structure 2 arranged in the tube 1. The driving structure 4 includes a driving device 7 and a driving operation structure 20. A plurality of unidirectional airflow windows 3 are provided on a side wall 5 of the tube structure 1. The plurality of unidirectional airflow windows 3 include passively opened windows 9, closed windows 8 and actively opened windows 10. The plurality of unidirectional airflow windows 3 are arranged on top, left and right sides of the tube wall of the tube structure 1. When the running structure in the tube structure 1 is operated forward, a front air pressure is increased. When the front air pressure is greater than an air pressure outside the tube structure 1, the passively opened windows 9 are passively opened to a open state. When the front air pressure in the tube structure 1 is equal to or less than the air pressure outside the tube structure 1, the passively opened windows 9 are automatically closed to a close state. Through such an airflow switching adjustment, the front air pressure in front of the driving structure 4 is balanced with the air pressure outside the tube structure 1, thereby eliminating a high-pressure air resistance formed by the driving structure 4 running forward in the tube structure 1.

As shown in FIGS. 2-7, the present disclosure further includes a running sealing structure. The plurality of unidirectional airflow windows 3 are arranged on an upper wall 25 and the side wall 5 of the tube structure 1. The plurality of unidirectional airflow windows 3 include passively opened windows 9, closed windows 8 and actively opened windows 10. The plurality of unidirectional airflow windows 3 are arranged on top, left and right sides of the tube wall of tube structure 1.

A rail 24 is fixedly connected to a bottom surface 23 of the tube structure 1. The driving structure 4, the carrier structure 2 and a running sealing structure 19 operate on the rail 24. The driving structure 4 and the running sealing structure 19 make the tube structure 1 nearly completely sealed. The driving structure 4 includes at least one driving device 7, a driving operation structure 20 and a driving operation sealing structure 6. The driving structure 4 is arranged in front of the carrier structure 2. The driving operation sealing structure 6 is a retractable structure configured to adjust a contact tightness and a clearance between the driving operation sealing structure 6 and the tube wall of the tube structure 1. The running sealing structure 19 includes a sealing operation structure 21 and a sealing structure 16. The sealing structure 16 is a retractable structure configured to adjust a contact tightness and a clearance between the sealing structure 16 and an tube wall of the tube structure 1. The sealing structure 16 is arranged in rear of the carrier structure 2. The sealing structure 16 is configured to mainly prevent an atmospheric air in the tube structure behind the carrier structure 2 from flowing into a low pressure space in an operating cavity 18, thereby affecting the low pressure state of the operating cavity 18. The driving structure 4 is arranged in front of the carrier structure 2 and is directly connected to the carrier structure 2 via a connecting structure 22. The running sealing structure 19 is arranged behind the carrier structure 2 and is directly connected to the carrier structure 2. The driving structure 4 and the carrier structure 2, the running sealing structure 19 and the carrier structure 2, and two adjacent carrier structures 2 are rigidly connected by a hook respectively. A front end of the driving structure 4 is provided with an airflow dividing device 11 extending forward. The airflow dividing device 11 is configured to divide the airflow in front of the driving structure 4 into airflow flows to the left and right sides, thereby reducing the air resistance during operation.

In the above embodiment, as shown in FIGS. 1-5, the side wall 5 is provided with a plurality of passively opened windows 9. When the front air pressure is greater than the air pressure outside the tube structure 1, the passively opened windows 9 are passively opened to a open state. When the front air pressure in the tube structure 1 is equal to or less than the air pressure outside the tube structure 1, the passively opened windows 9 are automatically closed to a close state. Through such an airflow switching adjustment, the front air pressure in front of the driving structure 4 is balanced with the air pressure outside the tube structure 1, thereby eliminating a high-pressure air resistance formed by the driving structure 4 running forward in the tube structure 1.

In the above embodiment, as shown in FIGS. 2-3, the side wall 5 is provided with a plurality of actively opened windows 10. When the plurality of actively opened windows 10 are opened to a open state, the air outside the tube structure 1 quickly flows into the tube structure 1 to increase the air pressure in rear of the running sealing structure 19, reducing an air pressure difference between the driving structure 4 and the running sealing structure 19, improving the drive efficiency of the driving structure 4.

In the above embodiment, as shown in FIG. 2, the driving structure 4 has or does not have a clearance between an outer surface of the sealing structure 4 and the tube wall of the tube structure 1. That is, the driving structure 4 completely or incompletely seals the tube structure 1. The clearance between the outer surface of the sealing structure 4 and the tube wall of the tube structure 1 is 0-50 mm; preferably, it is 0-30 mm; more preferably, it is 0-10 mm.

In the above embodiment, as shown in FIGS. 2, 3 and 7, an exhaust power device 15 is arranged in the running sealing structure 19 to form a sealing decompression structure. The sealing decompression structure is configured in rear of the carrier structure 2. The exhaust power device 15 is controlled to start by a negative pressure, so that the air leaking into the operating cavity 18 during the operation enters an air inlet 14 and is discharged from an air outlet 17. Since an one-way airflow valve 13 arranged in the air inlet 14 is controlled by the negative pressure, that is, when an air pressure at the air inlet 14 of the exhaust power device 15 reaches a set negative pressure value, the one-way airflow valve 13 at the operating cavity 18 side can be opened. The air in the operating cavity 18 is discharged into the tube structure 1 behind the sealing decompression structure via the exhaust power device 15, so that the low air pressure state around the carrier structure 2 can be continuously maintained.

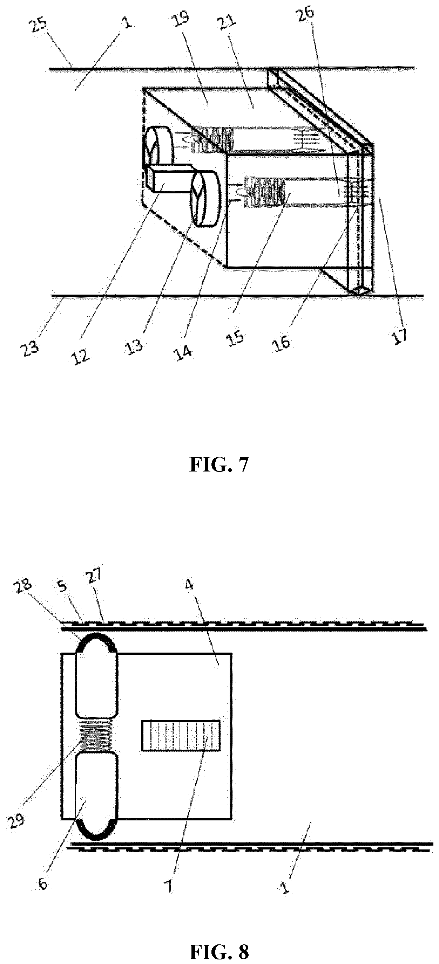

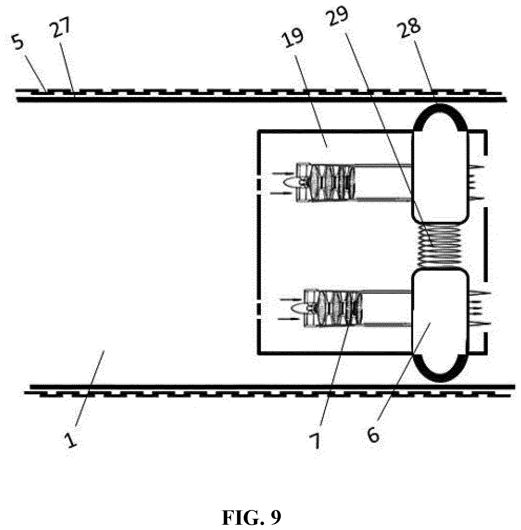

In the above embodiment, as shown in FIGS. 8 and 9, the transportation device using a tube as a rail further includes a position limiting structure including a first magnetic device 27 and a second magnetic device 28. The first magnetic device 27 is arranged on the tube wall. The second magnetic device 28 is arranged on the driving structure 4 and the running sealing structure 19. The position limiting structure is configured to maintain a clearance between the driving structure 4 and the tube structure 1, the running sealing structure 19 and the tube structure 1 and the carrier structure 2 and the tube structure 1 during operation so as to avoid frictional collision. Furthermore, the driving operation sealing structure 6 is provided with an elastic structure 29 configured to keep the driving operation sealing structure 6 in a state of outward elastic extension. An inward repulsion generated by the magnetic devices and the outward extension generated by the elastic structure 29 ensure that the driving operation sealing structure 6 is in a properly sealed state throughout the vehicle operation.

In the above embodiment, wheel-rail drive and/or linear motor drive are adopted between a bottom of the carrier structure 2 and the rail 24.

In the above embodiment, the first magnetic device 27 and the second magnetic device 28 adopt a permanent magnetic device and/or an electrically magnetic device.

In the above embodiment, the clearance between the tube wall of the tube structure 1 and a top of the carrier structure 2 is between 0-50 mm, preferably between 0-30 mm, more preferably between 0-10 mm.

In the above embodiment, the exhaust power device 15 may adopt one or any combination of two or more of an electric fan, a fan engine, a ducted fan, a turbofan engine, a turbojet engine, a ramjet engine, a pulsating jet engine, and a turbofan jet engine. The energy source adopts one or any combination of electricity, hydrogen, oxygen, and fuel, preferably one or any combination of electricity, hydrogen, and oxygen.

In the above embodiment, the transportation device further includes a plurality of sensors arranged on the carrier structure 2, the rail 24, the tube structure 1, the exhaust power device 15, the plurality of unidirectional airflow windows 3, the driving structure 4, and the running sealing structure 19. Each of the plurality of sensors is electrically coupled to a control system.

When the transportation device is in operation, the driving device 7 is first started by the control system to drive the driving operation structure 20 to operate. When the running structure in the tube structure 1 is operated forward, the front air pressure is increased. When the front air pressure is greater than the air pressure outside the tube structure 1, the passively opened windows 9 are passively opened to a open state. When the front air pressure in the tube structure 1 is equal to or less than the air pressure outside the tube structure 1, the passively opened windows 9 are automatically closed to a close state. Through such an airflow switching adjustment, the front air pressure in front of the driving structure 4 is balanced with the air pressure outside the tube structure 1, thereby eliminating a high-pressure air resistance formed by the driving structure 4 running forward in the tube structure 1. At the same time, when the running structure in the tube structure 1 is operated forward, a negative pressure is formed at a tail portion thereof, and the plurality of actively opened windows 10 is automatically opened to a open state, so that the airflow outside the tube enters the tube structure in a large amount, maintaining a balance of the air pressure between the tail portion and the outside of the tube structure 1, increasing the driving efficiency of the drive system.

Further, when the transportation device including a running sealing structure of the present disclosure is operated in the tube structure 1, the driving device 7 of the driving structure 4 is first started by the control system to drive the driving structure 4 to operate forward. At this time, the front air pressure of the driving structure 4 increases with the increase of the running speed. When the air pressure in the tube structure 1 is greater than the air pressure outside the tube structure 1, the passively opened windows 9 are passively opened to form an airflow flowing from the tube structure 1 to the outside. When the driving structure 4 passes the passively opened windows 9, the air volume in the tube structure 1 is significantly reduced due to the sealing and exhaust action of the driving structure 4. So that, the low air pressure is formed at the tail portion of the driving structure 4, and the passively opened windows 9 are closed to form a local low air pressure in the operating cavity 18. At the same time, the running sealing structure 19 behind the carrier structure 2 is configured to prevent a large amount of air behind running sealing structure 19 from entering the operating cavity 18, and maintain the local low air pressure around the carrier structure 2. Further, the exhaust power device 15 of the running sealing structure 19 is started to exhaust a small amount of air leaking into the operating cavity 18 to the tube structure 1 behind the running sealing structure 19 via the air outlet 17 by a high speed suction. So that the local low air pressure around the carrier structure 2 is maintained and the air resistance is lowered. The wheel-rail drive and/or linear motor drive are started to drive the carrier structure 2 running forward in a local low air pressure and low resistance state. At the same time, the clearance between the outer surface of the driving structure 4 and the tube wall of the tube structure 1 is significantly smaller than the clearance between the outer surface of the carrier structure 2 and the tube wall of the tube structure 1, so that the amount of air leaked during operation is significantly less than the amount of air it should have in its normal pressure state, forming the negative pressure and reducing the air resistance. At the same time, when the running structure in the tube structure 1 operates forward, a negative pressure is formed at the tail portion thereof, and the plurality of actively opened windows 10 is automatically opened to a open state, so that the airflow outside the tube structure 1 enters the tube structure 1 in a large amount, maintaining a balance of the air pressure between the tail portion and the outside of the tube structure 1, increasing the driving efficiency of the drive system.

The technical effects of the present disclosure will be further described below with reference to specific examples.

Experimental Example 1, simulation experiment of the passively opened windows:
Experimental materials: electric remote control toy car with a size of 500^{∗}375^{∗}375 mm, remote control, plexiglass plate with thickness of 3 mm, rubber ishers, plexiglass tube with a size of 400^{∗}400 mm.

Preparation of experimental device: A plurality of square holes with a size of 90^{∗}90 mm are trepanned on the side wall of the plexiglass tube at a interval of 100 mm. The plexiglass plate is cut into 100^{∗}100 mm square plates. Square rubber ishers with a size of 95^{∗}95 mm are pasted on one side of the square plates. The square plates are hanged to the outside of the opening of the plexiglass tube. The plexiglass tubes are straightly connected to a length of 20 meters. The electric remote control toy car is placed in one end of the plexiglass tube.

Experimental methods and results: The electric remote control toy car is remotely started and accelerated. It can seen that the electric remote control toy car runs fast in the tube, and the hanged square plates are opened before the electric remote control toy car arriving the square holes and closed after the electric remote control toy car passing the square holes at the location of the electric remote control toy car passing through. The running speed of the electric remote control toy car in the tube has not slowed down significantly. It is indicated that the passively opened windows of the present disclosure are opened when the airflow in the tube is pressurized, and is closed after the pressure is released.

Experimental Example 2, operation experiment in the tube structure:
Experimental materials: 1.5 mm thick stainless steel plate, 30^{∗}30 mm angle iron, rubber pads, permanent magnet blocks, bearings, 0-100 KPa vacuum pressure gauge, 8.5 KW plant protection machine, 11 V and 8000 mA DUPU lithium battery, rubber wheels with a diameter of 180 mm, electronic speed controller, remote control.

### Preparation of experimental device:

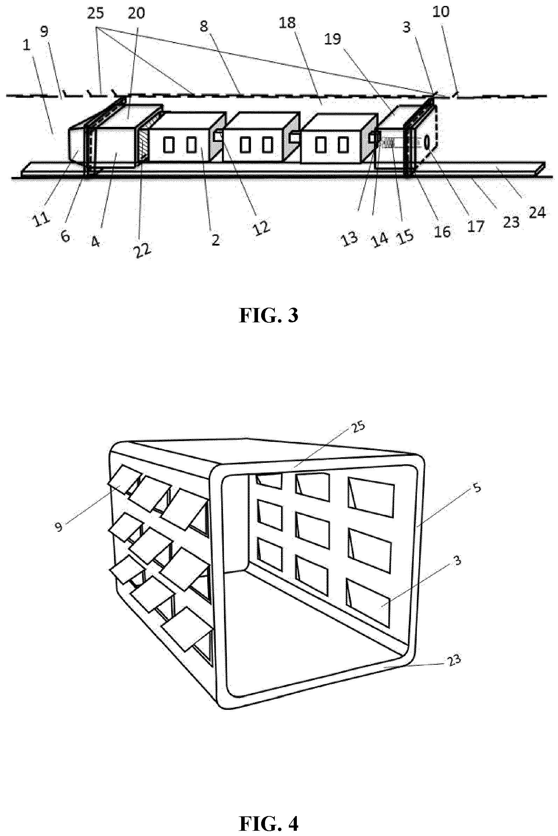

1. Preparation of tube structure: 150 stainless steel tubes of 1.5 m in length and 600 mm in diameter are made as shown in FIG. 2 using a 1.5 mm thick stainless steel plate. The stainless steel tubes are connected by screws to form a tube structure with a length of 200 meters on a test site pre-planned.
2. Preparation of the driving structure: firstly, the square bracket with a size of 590^{∗}590^{∗}590 mm is made with the angle iron. The bottom plate and the left and right sides plates are made with the 1.5 mm thick stainless steel plate. Four plant protection machines are fixedly connected with the rubber wheels and the side plates separately. The lithium battery and electronic speed controller are installed. The remote control is fixed. For bearings are installed symmetrically on the left, right and top side plates. Then the top plate and the front plate made with 1.5 mm thick stainless steel plate are installed on the square bracket. The rear side of the tube structure in the running direction is not closed. A pulling hook and the protruding structure as shown in FIG. 4 are mounted on the front side of the tube structure in the running direction. Then, first, a rectangular bracket of 1200^{∗}580^{∗}580 mm (length, width and height) is made with the angle iron. The outer circumference of the bracket is packed with 1.5 mm thick stainless steel plate. Four bearings used as the sliding wheels are symmetrically mounted on the lower, upper, left and right sides. The rear side of the tube structure in the running direction is a window structure that can be opened and closed. The plant protection machine, electronic speed controller, lithium battery and the remote control are connected.

### Experimental methods and results:

A load of 100 kg is placed in the carrier structure. The running structure is pushed into the tube structure from an inlet end. The plant protection machine is remotely started. The plant protection machine runs in the tube at a speed of 30 m/s. It shows that the unidirectional airflow windows open before the carrier structure arriving the unidirectional airflow windows at the location of the carrier structure passing through. The carrier structure runs forward fast. It shows that the driving structure discharges the front air in the tube through the unidirectional airflow windows, without increasing the running resistance, and completely avoiding the risk of derailing.

### Experimental Example 3, pressure releasing experiment of tube sealing (1):

Experimental materials: 1.5 mm thick stainless steel plate, 30^{∗}30 mm angle iron, wire rope with a diameter of 3 mm, rubber pads, hinges, permanent magnet blocks, 15 KW three-phase motor, roller of vertical winch, bearings, 0-100 KPa vacuum pressure gauge.

### Preparation of experimental device:

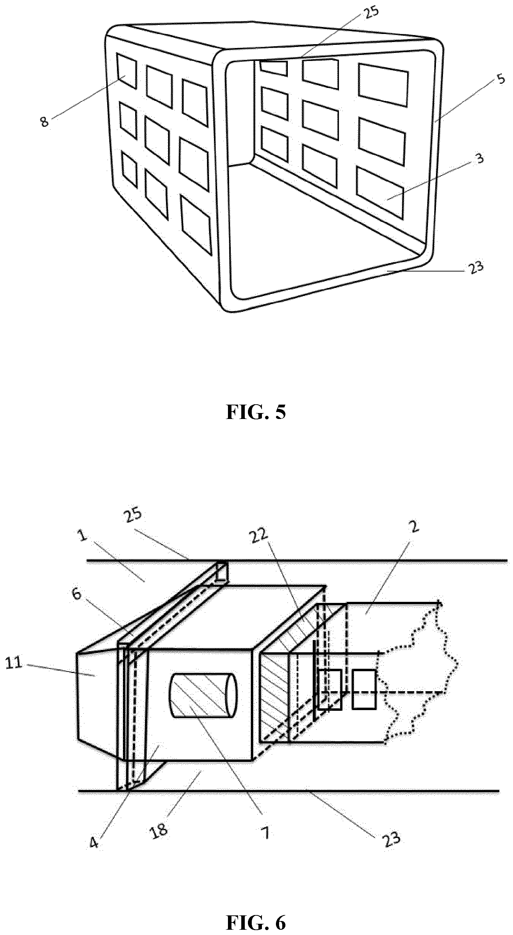

1. Preparation of tube structure: 150 stainless steel tubes having 1.5 m in length and 600 mm in diameter as shown in Fig. 2 are fabricated by a 1.5 mm thick stainless steel plate. Nine unidirectional airflow windows of 100^{∗}150 mm are trepanned on each side of the stainless steel tube. Window covers are made with stainless steel plate. The rubber pads are used as sealing strips and the permanent magnet blocks are used as closing devices. The stainless steel tubes are connected by screws to form a tube structure with a length of 200 meters on a test site pre-planned.
2. Preparation of pulling operation device: The 15 KW three-phase motor is vertically installed at the upper end of the vertical winch. The wire rope is connected to the roller.
3. Preparation of the driving structure: Firstly, the 590^{∗}590^{∗}590 mm square bracket is made with the angle iron. The outer circumference of the bracket is packed with 1.5 mm thick stainless steel plate. Four bearings used as the sliding wheels are symmetrically mounted on the lower, upper, left and right sides of the square bracket. A pulling hook and a protruding structure as shown in FIG. 5 are mounted on the front end of the square bracket in the running direction. The rear end of the square bracket in the running direction is provided with a window structure that can be opened and closed;
4. Preparation of the carrier structure: First, a rectangular bracket of 1200^{∗}580^{∗}580 mm (length, width and height) is made with the angle iron. The outer circumference of the bracket is packed with 1.5 mm thick stainless steel plate. Four bearings on the rectangular bracket used as the sliding wheels are symmetrically mounted on the lower, upper, left and right sides. The rear end of the rectangular bracket in the running direction is provided with a window structure that can be opened and closed.
5. Preparation of the running sealing structure: Firstly, the 590^{∗}590^{∗}590 mm square bracket is made with the angle iron. The bottom plate and the left and right sides plates are made with the 1.5 mm thick stainless steel plate. Four bearings are symmetrically mounted on the square bracket.

### Experimental methods and results:

Experiment 1: The pulling operation device is fixed to an outside of one end (outlet end) of the tube. The wire rope is connected with the driving structure. Then the driving structure is pushed into the tube and pulled to the other end of the tube (inlet end). A load of 100 kg is pushed into the tube structure through the inlet end, then pushed into the running sealing structure. The driving structure connected to the pulling operation device, the carrier structure and the running sealing structure are arranged in the tube in sequence, and which are not directly connected to each other. The pulling operation device is started to pull the steel wire rope at a speed of 15 m/s, and so that the driving structure is driven to run forward in the tube. It shows that the unidirectional airflow windows are opened immediately before the driving structure arriving the unidirectional airflow windows at the location of the driving structure passing through, and is quickly closed after it passing through, and the carrier structure and the subsequent running sealing structure are also run forward fast in the tube. The unidirectional airflow windows are always closed. It is indicated that the front air in the tube is discharged by the driving structure through the unidirectional airflow windows and the low air pressure is formed behind the running sealing structure due to the sealing function of the carrier structure and the running sealing structure, so that the carrier structure and the running sealing structure are driven forward.
Experiment 2: Experiment conditions are the same with Experiment 1. The difference is that a vacuum pressure gauge and a reading camera are arranged at the rear end of the driving structure. The inlet end of the tube structure is closed. The driving structure is started to operate forward in the tube. It shows that the unidirectional airflow windows are opened immediately before the driving structure arriving the unidirectional airflow windows at the location of the driving structure passing through, and is quickly closed after it passing through, and the carrier structure and the subsequent running sealing structure are also run forward fast in the tube. The pressure change displayed on the vacuum gauge is obtained. The pressure change displayed on the vacuum gauge decreases from initial 100 KPa to 84 KPa. It is indicated that the present disclosure generates a negative pressure in the tube structure.

Experimental example 4, pressure releasing experiment of tube sealing (2):
Experimental materials: 8.5 KW plant protection machine, 11V and 8000mA DUPU lithium battery, rubber wheels with a diameter of 180 mm, ESC, 0-100 KPA vacuum pressure gauges, remote control, bearings, other materials are the same with the embodiment 3.

### Preparation of experimental device:

1. Preparation of the tube structure: is the same with embodiment 3.
2. Preparation of the driving structure: Firstly, the 590^{∗}590^{∗}590 mm square bracket is made with the angle iron. The bottom plate and the left and right sides plates are made with the 1.5 mm thick stainless steel plate. Four plant protection machines are fixedly connected with the rubber wheels and the side plates separately. The lithium battery and electronic speed controller are installed. The remote control is fixed. 4 bearings symmetrically are installed on the left, right and top side plates of the square bracket. Then the top plate and the front plate made with 1.5 mm thick stainless steel plate are installed on the square bracket. The rear side of the tube structure in the running direction is not closed. A pulling hook and the protruding structure as shown in FIG. 4 are mounted on the front end of the tube structure in the running direction. The plant protection machine, electronic speed controller, lithium battery and the remote control are connected.
3. Preparation of the running sealing structure: is the same with embodiment 3.
4. Preparation of the carrier structure: is the same with embodiment 3.

### Experimental methods and results:

Experiment 1: A load of 100 kg is placed in the carrier structure. The running structure is pushed into the tube structure via an inlet end. The driving structure connected to the pulling operation device, the carrier structure and the running sealing structure are arranged in the tube in sequence, which are not directly connected to each other. The plant protection machine is started remotely and runs in the tube at a speed of 30 m/s. It shows that the unidirectional airflow windows are opened immediately before the driving structure arriving the unidirectional airflow windows at the location of the driving structure passing through, and is quickly closed after it passing through, and the carrier structure and the subsequent running sealing structure are also run forward fast in the tube. The unidirectional airflow windows are always closed. It is indicated that the front air in the tube is discharged by the driving structure through the unidirectional airflow windows and the low air pressure is formed behind the running sealing structure due to the sealing function of the carrier structure and the running sealing structure, so that the carrier structure and the running sealing structure are driven forward.
Experiment 2: Experiment conditions are the same with Experiment 1. The difference is that a vacuum pressure gauge and a reading camera are arranged at the rear of the driving structure. The inlet end of the tube structure is closed. The driving structure is started to operate forward at a speed of 30 30 m/s in the tube. It shows that the unidirectional airflow windows are opened immediately before the driving structure arriving the unidirectional airflow windows at the location of the driving structure passing through, and is quickly closed after it passing through, and the carrier structure and the subsequent running sealing structure are also run forward fast in the tube. The unidirectional airflow windows are always closed. The pressure change displayed on the vacuum gauge is obtained. The pressure change displayed on the vacuum gauge decreases from initial 100 KPa to 85 KPa. It is indicated that the present disclosure generates a negative pressure in the tube structure.

Embodiment 5: simulation experiment of sealing structure control operation:
Experimental materials: Rufeboron permanent magnet blocks with a size of 30 mm^{∗}10 mm, neodymium iron boron permanent magnet block with a size of 10 mm , 12-blades ducted fan engine with a diameter of 120 mm, remote control, PVC transparent plate, springs.

Preparation of the experimental device: A 500^{∗}500 mm square tube and a ring connection of 2 m in diameter are made with the PVC transparent plate. A square box of 400 mm high, 400 mm wide and 300 mm long is made with the PVC transparent plate. Two square plates of 300 mm high, 20 mm thick and 100 mm long are made with PVC transparent plate. The cross-section sides of the two square plates are connected by four springs from top to bottom, and the other side of the two square plate sections are arranged with the Rufeboron permanent magnet blocks. two grooves having a height of 310 mm and a thickness of 25 mm are slotted in the front portion of the manufactured PVC transparent plate square box. The prepared square plate placed in the groove. Two Rufeboron permanent magnet blocks are arranged on upper wall and lower wall of the square tube made with the PVC transparent plate at the location corresponding to the square magnet blocks on the square plates in the direction of the tube extension. The two Rufeboron permanent magnet blocks repel the square magnet blocks on the square plate. The 12-blades ducted fan engine with a diameter of 120 mm, battery and remote control device are placed on the rear side of the PVC transparent plate box. The air inlet is at the front and the exhaust port is at the rear. The operation device of this experiment is finished. The prepared operation device is placed into the square tube made with the PVC transparent plate.

Experimental method and result: The 12-blades ducted fan engine with a diameter of 120 mm is started remotely and accelerated to the maximum speed. It can be seen that the operation device slides forwardly in the annular tube. During the sliding process, the square plate and the tube are always in contact. When the operation device is stopped in different annular parts of the tube structure, it can be seen that there is always a clearance of about 1-2 mm between the Rufeboron permanent magnet blocks and the square magnet blocks. It is proved that the magnetic repulsive and the structure of elastic stretch can maintain effective control of sealing and smooth operation.

Embodiment 6: Effect of the sealing decompression structure on the maintenance of low air pressure in the tube structure:
Experimental material: 12-blades ducted fan engine with a diameter of 120 mm, other materials are the same as embodiment 3.

### Preparation of experimental device:

1. Preparation of tube structure: is same as embodiment 3.
2. Preparation of the pulling operation device: is the same as embodiment 3.
3. Preparation of the driving structure: is same as embodiment 3.
4. Preparation of the carrier structure: is same as embodiment 3.
5. Preparation of the sealing decompression structure: Firstly, a square bracket with a size of 590^{∗}590^{∗}590 mm (length, width and height) is made with angle iron. The outer circumference of the bracket is packed with 1.5 mm thick stainless steel plate, and the upper and lower sides and the left and right sides are symmetrically installed 4 bearings. A front and rear holes of the box are trepanned and provided with a front and rear air ducts.

Then the 12-blades ducted fan engine with a diameter of 120 mm which towards the running direction is installed and fixed in the air ducts.

### Experimental methods and results:

The experiment condition is the same as the embodiment 3. The driving structure, the carrier structure and the sealing decompression structure are sequentially pushed into the tube. The inlet and rear end of the sealing decompression structure are fixed so that it does not run in the tube. The vacuum pressure gauge and the camera are installed in the front of the sealing decompression structure. The pulling operation device is started, the steel wire rope is pulled at a speed of 30 m/s, and the driving structure is driven to slide forward in the tube. It shows that the unidirectional airflow windows are opened immediately before the driving structure arriving the unidirectional airflow windows at the location of the driving structure passing through, and is quickly closed after it passing through, and the carrier structure and the subsequent running sealing structure are also run forward fast in the tube. The unidirectional airflow windows are always closed. The driving structure is pulled to the outlet end and then is fixed, and the pressure value displayed on the vacuum pressure gauge is continuously observed for 5 minutes. The ducted fan engine in experimental group is started, and the ducted fan engine in the control group is kept off. It shows that the pressure value displayed in the vacuum gauge of the control group decreased from the initial 100 KPa to 85 KPa, and the pressure value in the tube recovered to 100 KPa after 30 seconds. The pressure value displayed in the vacuum gauge of the experimental group decreased from the initial 100 KPa to 86 KPa. After 30 seconds, the pressure value in the tube is 95 KPa, and it remains at 99 KPa after 5 minutes, indicating that the sealing decompression structure is able to maintain the negative pressure state in the tube.

Example 7, the negative pressure package experiment of the running structure of the present disclosure:
Experimental materials: 12-blades ducted fan engine with a diameter of 120 mm, rubber strips, 3 mm thick stainless steel plate, and other materials are the same as embodiment 3.

### Preparation of experimental device:

1. Preparation of tube structure: is same as embodiment 3. Three tubes in the embodiment 3 is connected each other as an experimental tube structure.
2. Preparation of the inner cavity sealing type operation driving structure: the same as in the third embodiment.
4. Preparation of the carrier structure: is same as embodiment 3.
5. Preparation of the sealing decompression structure: is same as embodiment 6.

### Experimental methods and results:

Firstly, the driving structure, the carrier structure and the sealing decompression structure are sequentially connected, the vacuum pressure gauge and the camera are installed in the middle of the carrier structure, and then pushed into the tube structure. The rubber strips are used to seal the clearance between the sealing decompression structure and the tube structure and the clearance between the driving structure and the tube structure. During the experiment, the ducted fan engine is turned on for 10 minutes, then the ducted fan engine is turned off, the running structure is taken out, and the pressure value displayed on the vacuum gauge on the carrier structure is observed. It shows that the pressure value displayed in the vacuum pressure gauge decreases from the initial 100 KPa to 82 KPa, indicating that the driving structure, the carrier structure and the sealing decompression structure realize the semi-vacuum package state. In this experiment, the power of the 12-blades ducted fan engine with a diameter of 120 mm is low. The negative pressure formed will be lower if a ducted fan engine having a larger power is adopted.

It should be understood that for those of ordinary skills in the art, improvements or variations can be made based on the above descriptions, and such improvements and variations fall within the scope of the appended claims.

The embodiments are only illustrative of the present disclosure, and apparently the implementations are not limited by the above modes. The embodiments described herein and various modifications based on the ideas and technical solutions of the present disclosure fall within the scope of the present application.

## Claims

1. A rapid transportation device with a tube as a rail, comprising a drive system, a carrier structure and a rail; **characterized in that** the rail is an extendable tube structure surrounded by a tube wall; the tube wall is provided with a plurality of unidirectional airflow windows with controllable airflow direction; the carrier structure is driven by the drive system to operate in the tube structure.

2. The transportation device according to claim 1, **characterized in that** the plurality of unidirectional airflow windows comprise a plurality of passively opened airflow windows and a plurality of actively opened airflow windows;
1) **characterized in that** the plurality of passively opened airflow windows are activated by a pressure difference of an internal pressure and an external pressure of the tube structure; the plurality of passively opened airflow windows comprises outward passively opened airflow windows used under a condition that the internal pressure is greater than the external pressure of the tube structure; and the plurality of passively opened airflow windows are arranged at multiple parts of the tube wall of the tube structure;
2) the plurality of actively opened airflow windows comprising outward actively opened airflow windows and inward actively opened airflow windows are driven by mechanical kinetic energy; the plurality of actively opened airflow windows are arranged at multiple parts of the tube wall of the tube structure.

3. The transportation device according to claim 1, further comprising a control system and a braking system, having at least one following features:
1) the drive system includes an inner chamber sealing type operational drive structure within the tube structure; the drive structure is a plug type structure arranged in front of the carrier structure and is configured to drive the driving structure to operate forward and backward;
2) the drive system includes an inner chamber sealing type operational drive structure within the tube structure; the driving system comprises a running sealing structure arranged in rear of the carrier structure; the running sealing structure is able to operate forward and backward;
3) the driving structure, one or more of the carrier structures, and the running sealing structure are sequentially arranged in a traveling direction of the carrier structure from front to back in the tube structure;
4) an operating gap is formed between an inner wall of the tube structure and an outer wall of the driving structure, the carrier structure and the inner chamber sealing structure of the tube;
5) the drive system comprises a decompression structure in the inner chamber of the tube structure; the decompression structure is an exhaust device provided with an exhaust power device; an intake of the exhaust power device is communicated with the operating gap.

4. The transportation device according to claim 3, **characterized in that** the driving structure has at least one of following features:
1) the driving structure is arranged in front of the carrier structure; the driving structure is an airtight plug-type structure which is able to seal most parts of the tube structure and drive the forward and backward movement of the driving structure;
2) the driving structure is arranged in front of the carrier structure and comprises at least one driving device, a driving operation structure and a driving operation sealing structure; the driving structure is an airtight structure which is able to seal most parts of the tube structure and drive the forward and backward movement of the driving structure;
3) a distance and a contact tightness between the outer wall of the driving operation sealing structure and the inner wall of tube wall is adjusted by laterally stretching of the plug type structure.

5. The transportation device according to claim 3, **characterized in that** the inner chamber sealing type structure has at least one of following features:
1) the sealing structure is arranged in the rear of the carrier structure; the driving structure is an airtight plug type structure which is able to seal most parts of the tube structure and operate forward and backward;
2) the running sealing structure comprises a sealing operation structure and a sealing structure; the running sealing structure is arranged in rear of the carrier structure; the driving structure is an airtight plug type structure which is able to seal most parts of the tube structure and operate forward and backward;
3) The sealing structure is able to adjust a distance and a tightness between the outer wall of the running sealing structure and the tube wall by laterally stretching.

6. The transportation device according to claim 3 or 5, **characterized in that** the decompression structure comprises a sealing decompression structure; the exhaust power device is arranged in the running sealing structure to form the sealing decompression structure; an air inlet of the exhaust power device is arranged in a front portion of the exhaust power device and communicates with the operating cavity; an exhaust port of the exhaust power device is arranged in a rear portion of the exhaust power device and communicates with an air in the tube structure behind the running sealing structure; the sealing decompression structure is independent of the carrier structure or integrated with the carrier structure.

7. The transportation device according to claim 3 or 6, **characterized in that** the air inlet of the exhaust power device is provided with an one-way airflow valve configured to open according to air pressure and control a flowing direction of the airflow; the one-way airflow valve is opened when the air pressure is a negative pressure; the flowing direction of the airflow is from the operating cavity to an outside space of the operating cavity.

8. The transportation device according to claim 1, or 3 or 4 or 5 or 6, **characterized in that** the carrier structure comprises a carriage-type structure and a carrier-type structure; the carrier structure comprises at least one of following features:
1) an independent driving device;
2) arranged behind the driving structure;
3) followed by the running sealing structure;
4) provided with a magnetic levitation structure at a lower portion of the carrier structure and above a bottom wall of the tube structure;
5) a plurality of carrier structures are arranged in series.

9. The transportation device according to claim 1 or 3 or 4 or 8, **characterized in that** a driving mode of the driving comprises at least one of wheel-rail driving, linear motor driving, and exhausting driving and reacting driving.

10. The transportation device according to claim 3 or 4 or 5, **characterized in that** the driving structure, the sealing structure and the tube structure are provided with a position limiting structure separately; the position limiting structure is a mutually matched magnetic repulsive mating structure on an inner surface of the tube structure and an elastic stretching structure provided on an outer surface of the sealing structure; a width of the operating gap is 0-50 mm, preferably 0-30 mm, and more preferably 0-10 mm.

11. The transportation device according to claim 3, **characterized in that** the braking system comprises a plurality of actively closed windows arranged on the tube wall.

12. The transportation device according to claim 1 or 3, **characterized in that** the driving system comprises a plurality of actively opened windows arranged on the tube wall.

13. The transportation device according to claim 1 or 2 or 3 or 4 or 5 or 6 or 8 or 10 or 11 or 12, **characterized in that** the tube wall is provided with a plurality of outward opening tube exits and a plurality of lateral or inward opening carrying safety entrances; the plurality of outward opening tube exits and the plurality of lateral or inward opening carrying safety entrances are alternatively arranged in an unequal distance.

14. The transportation device according to any one of claims 1-13, further comprising a plurality of sensors arranged on the carrier structure, the tube structure, the braking system and the driving system; each of the plurality of sensors is electrically coupled to the control system.

15. An application of the transportation device using a tube as a rail of any according to any one of claims 1-14 in development of rapid transportation devices.
